# EUROPÄISCHE PATENTSCHRIFT

(11) **EP 3 014 838 B1**
(45) Veröffentlichungstag und Bekanntmachung des Hinweises auf die Patenterteilung: **17.05.2017**
(21) Anmeldenummer: 14734393.3
(22) Anmeldetag: 18.06.2014
(51) Int. Cl.: H04L 29/06, H04W 12/12

(54) **ABSICHERUNG EINER NAHFELD-TRANSAKTION ZWISCHEN EINEM TERMINAL UND EINEM SICHERHEITSMODUL**
PROTECTION OF A NEAR-FIELD TRANSACTION BETWEEN A TERMINAL AND A SECURITY MODULE
PROTECTION D'UNE TRANSACTION EN CHAMP PROCHE ENTRE UN TERMINAL ET UN MODULE DE SÉCURITÉ

(30) Priorität: 24.06.2013 DE 102013010627
(43) Veröffentlichungstag der Anmeldung: 04.05.2016
(73) Patentinhaber: Giesecke & Devrient GmbH, 81677 München (DE)
(72) Erfinder: DAHMOUNI, Youssef, 81929 München (DE)
(86) Internationale Anmeldenummer: PCT/EP2014/001694
(87) Internationale Veröffentlichungsnummer: WO 2014/206545

(56) Entgegenhaltungen:
- EP-A1- 1 304 661
- EP-A1- 2 592 584
- WO-A1-2013/152845
- Kenneth P Fishkin ET AL: "Enhancing RFID Privacy via Antenna Energy Analysis", MIT RFID Privacy Workshop, November 2003 (2003-11), XP055138207, Gefunden im Internet: URL:http://rfidprivacy.media.mit.edu/2003/ papers/fishkin.pdf [gefunden am 2014-09-04]

## Beschreibung

Die Erfindung betrifft ein Verfahren zur Absicherung einer Transaktion zwischen einem Terminal und einem Sicherheitsmodul.

Bei der Durchführung von Transaktionen zwischen einem Terminal und einem Sicherheitsmodul über eine kontaktlose Schnittstelle, wie z.B. eine NFC-Schnittstelle, besteht die Gefahr von sog. Relay-Angriffen. Dabei positioniert ein Angreifer ein manipuliertes Terminal (sog. Leech) in Kommunikationsreichweite der kontaktlosen Schnittstelle des Sicherheitsmoduls eines Nutzers (z.B. einer Chipkarte). Ohne Wissen des Nutzers wird eine Kommunikation über die kontaktlose Schnittstelle aufgebaut. Anschließend wird unter Zwischenschaltung eines Moduls des Angreifers (sog. Ghost), das kontaktlos mit einem anderen Terminal kommuniziert, eine Transaktion an diesem anderen Terminal über das Sicherheitsmodul des Nutzers durchgeführt. Um Relay-Angriffe zu vermeiden, sind derzeit Laufzeitmessungen bekannt, welche die Laufzeit von Signalen zwischen Sicherheitsmodul und Terminal bestimmen, wobei bei zu langen Laufzeiten die Transaktion abgebrochen wird.

Aus dem Aufsatz "Enhancing RFID Privacy via Antenna Engery Analysis" von Kenneth P. Fishkin et al. geht ein Verfahren hervor, mit dem ermittelt werden kann, wie weit ein RFID-Tag von einem Terminal bzw. Lesegerät entfernt ist.

Aus der EP 2 592 584 A1 geht ein Verfahren hervor, mit dem eine Transaktion mit einem portablen Datenträger abgesichert werden kann. Dabei wird eine Transaktion nur dann ausgeführt, wenn sich das Transaktionsendgerät und der Datenträger, mit dem die Transaktion ausgeführt wird, in einem Nahbereich des Drahtlos-Kommunikationsfeldes befinden.

Aufgabe der Erfindung ist es, ein Verfahren zur Absicherung einer Transaktion zwischen einem Terminal und einem Sicherheitsmodul zu schaffen, welches auf einfache Weise ohne Laufzeitmessungen die Erkennung eines Relay-Angriffs ermöglicht.

Diese Aufgabe wird durch den Gegenstand der unabhängigen Ansprüche gelöst. Weiterbildungen der Erfindung sind in den abhängigen Ansprüchen definiert.

Das erfindungsgemäße Verfahren dient zur Absicherung einer Transaktion, wie z.B. einer Bezahl-Transaktion oder Ticket-Transaktion, zwischen einem Terminal und einem Sicherheitsmodul, welche im Rahmen der Transaktion über das (magnetische bzw. elektromagnetische) Wechselfeld einer ersten kontaktlosen Schnittstelle kommunizieren. Während der Durchführung der Transaktion wird am Ort des Sicherheitsmoduls eine Kopplungsstärke erfasst, welche eine Kopplung und insbesondere eine induktive Kopplung zwischen dem Terminal und dem Sicherheitsmodul über das Wechselfeld der ersten Schnittstelle und/oder eine Kopplung zwischen dem Terminal und dem Sicherheitsmodul über ein Wechselfeld einer zweiten kontaktlosen Schnittstelle repräsentiert. Im Falle, dass die Kopplungsstärke ein Abbruchkriterium in Bezug auf deren Größe und/ oder deren zeitliche Variation erfüllt, wird die Transaktion abgebrochen.

Erfindungsgemäß macht man sich die Erkenntnis zunutze, dass der Nutzer bei der Durchführung einer Transaktion ohne Relay-Angriff sein Sicherheitsmodul möglichst exakt an das Terminal positioniert, wohingegen im Falle eines Relay-Angriffs der Angreifer seinen Leech nicht derart genau an das angegriffene Sicherheitsmodul halten kann. Dies äußert sich in einer gegenüber dem Normalfall abweichenden Größe bzw. Variation der Kopplungsstärke.

Der obige Begriff des Sicherheitsmoduls ist hier und im Folgenden weit zu verstehen. Insbesondere ist das Sicherheitsmodul ein tragbarer Datenträger oder gegebenenfalls auch ein Endgerät (z.B. ein mobiles Endgerät) mit damit verbundenem tragbaren Datenträger, wobei der tragbare Datenträger in das Endgerät eingesetzt sein kann oder gegebenenfalls auch fest in das Endgerät integriert sein kann, beispielsweise in der Form eines TPM-Moduls oder einer Embedded SIM oder eines NFC-Moduls. Der tragbare Datenträger ist vorzugsweise eine Chipkarte, z.B. eine SIM/USIM-Karte, und/ oder ein Sicherheitselement und/ oder ein Token und/ oder ein RFID-Transponder und/ oder ein NFC-Modul.

In einer besonders bevorzugten Ausführungsform ist die erste Schnittstelle, über die das Terminal und das Sicherheitsmodul die Transaktion durchführen, eine RFID-Schnittstelle, insbesondere eine NFC-Schnittstelle oder gegebenenfalls auch eine UHF-RFID-Schnittstelle. Demgegenüber ist die zweite Schnittstelle vorzugsweise eine Schnittstelle zur induktiven Energieübertragung, insbesondere eine Qi-Schnittstelle, die auf dem Standard Qi zur induktiven Energieübertragung über kurze Distanzen basiert. Die Verwendung der Kopplungsstärke einer Energieübertragungs-Schnittstelle zur Bestimmung eines Relay-Angriffs weist den Vorteil auf, dass im Gegensatz zu einer NFC-Datenverbindung eine Energieübertragung einen möglichst hohen Kopplungsfaktor aufweist, so dass hierüber sehr zuverlässig ein Relay-Angriff festgestellt werden kann. In einer weiteren, bevorzugten Ausführungsform ist die erste Schnittstelle kryptographisch gesichert, was für NFC-Schnittstellen in der Regel immer der Fall ist.

In einer besonders bevorzugten Ausgestaltung wird die während der Durchführung der Transaktion erfasste Kopplungsstärke dem Terminal bereitgestellt, das das Abbruchkriterium überprüft und bei dessen Erfüllung die Transaktion abbricht. Die Absicherung der Transaktion wird somit zentral durch das Terminal überwacht.

Bevorzugt erfasst das Terminal ebenfalls eine Kopplungsstärke. Die Überprüfung des Abbruchkriteriums erfolgt durch einen Vergleich einer lokal gemessenen mit einer übertragenen Kopplungsstärke.

In einer bevorzugten Ausgestaltung wird die im Terminal erfasste Kopplungsstärke dem Sicherheitsmodul bereitgestellt, welches das Abbruchkriterium überprüft und bei dessen Erfüllung die Transaktion abbricht. Die Absicherung der Transaktion wird somit individuell durch das Sicherheitsmodul überwacht.

In einer besonders bevorzugten Variante des erfindungsgemäßen Verfahrens erfasst das Sicherheitsmodul die Kopplungsstärke, welche die Kopplung zwischen dem Terminal und dem Sicherheitsmodul über das Wechselfeld der zweiten Schnittstelle repräsentiert. Die erfasste Kopplungsstärke wird dann über die erste Schnittstelle an das Terminal übermittelt, das das Abbruchkriterium überprüft und bei dessen Erfüllung die Transaktion abbricht. Wie oben erwähnt, ermöglicht die Verwendung der Kopplungsstärke einer Schnittstelle zur Energieübertragung eine besonders zuverlässige Erfassung von Relay-Angriffen, da die Kopplungsstärken bei solchen Schnittstellen in der Regel wesentlich größer sind als bei reinen Kommunikations-Schnittstellen. Ferner wird im Falle, dass die erste Schnittstelle kryptographisch gesichert ist, ein Abhören bzw. eine Manipulation der übermittelten Kopplungsstärke durch einen Angreifer verhindert.

Die im erfindungsgemäßen Verfahren erfasste Kopplungsstärke wird vorzugsweise durch einen Wert repräsentiert, der umso größer ist, je größer die Signalstärke des Wechselfelds der ersten und/oder zweiten Schnittstelle am Ort des Sicherheitsmoduls ist. Insbesondere kann die Kopplungsstärke die Signalstärke selbst sein. Ebenso kann die Kopplungsstärke z.B. durch einen Kopplungsfaktor repräsentiert sein, der das Verhältnis der beim Sicherheitsmodul empfangenen Energie zu der vom Terminal ausgesendeten Energie repräsentiert.

In einer weiteren bevorzugten Ausführungsform der Erfindung ist es zur Erfüllung des Abbruchkriteriums erforderlich, dass während der Durchführung der Transaktion die Kopplungsstärke zumindest zeitweise und insbesondere länger als ein vorbestimmtes (vorzugsweise kontinuierliches) Zeitintervall außerhalb eines vorbestimmten Wertebereichs und insbesondere unterhalb eines vorgegebenen Schwellwerts liegt und/ oder die zeitliche Variation der Kopplungsstärke zumindest zeitweise und insbesondere länger als ein vorbestimmtes (vorzugsweise kontinuierliches) Zeitintervall eine vorbestimmte Schwelle überschreitet. In einer weiteren Ausgestaltung ist es zur Erfüllung des Abbruchkriteriums erforderlich, dass während der Durchführung einer Transaktion die Kopplungsstärke weniger als eine vorbestimmte Zeitspanne innerhalb eines vorbestimmten Wertebereichs liegt.

In einer weiteren Ausgestaltung ist die Erfüllung des Abbruchkriteriums an ein Zeitlimit gekoppelt, wobei das Abbruchkriterium dann erfüllt ist, wenn eine (vorzugsweise kontinuierliche) Zeitspanne, in der die Kopplungsstärke während der Durchführung der Transaktion außerhalb eines vorbestimmten Wertebereichs und insbesondere unterhalb eines vorgegebenen Schwellwerts liegt, das Zeitlimit überschreitet.

In einer weiteren Ausführungsform wird eine Transaktion dann abgebrochen, wenn während der Durchführung der Transaktion eine Verzerrung eines zeitlich variablen Signals des Terminals, das über die erste und/ oder zweite Schnittstelle im Sicherheitsmodul empfangen wird, eine vorbestimmte Schwelle überschreitet.

In einer weiteren Variante werden während der Transaktion Ereignisse erfasst, bei denen die Kopplungsstärke einen vorbestimmten Wertebereich verlässt und/ oder über mehr als ein vorbestimmtes Maß hinaus schwankt, wobei bei Auftreten eines Ereignisses das Sicherheitsmodul eine durch einen Benutzer wahrnehmbare Meldung ausgibt. Die Meldung kann dem Benutzer insbesondere anweisen, sein Sicherheitsmodul genauer bzw. näher an das Terminal zu halten. Auf diese Weise kann die fehlerhafte Detektion eines nicht vorhandenen Relay-Angriffs vermieden werden.

Neben dem oben beschriebenen Verfahren betrifft die Erfindung ferner eine Vorrichtung zur Absicherung einer Transaktion zwischen einem Terminal und einem Sicherheitsmodul, welche im Rahmen der Transaktion über das Wechselfeld einer ersten kontaktlosen Schnittstelle kommunizieren. Die Vorrichtung ist dabei derart ausgestaltet, dass sie während der Durchführung der Transaktion eine Kopplungsstärke am Ort des Sicherheitsmoduls erfasst oder eine erfasste Kopplungsstärke empfängt, wobei die Kopplungsstärke eine Kopplung zwischen dem Terminal und dem Sicherheitsmodul über das Wechselfeld der ersten Schnittstelle oder eine Kopplung zwischen dem Terminal und dem Sicherheitsmodul über ein Wechselfeld einer zweiten kontaktlosen Schnittstelle repräsentiert, wobei im Falle, dass die Kopplungsstärke ein Abbruchkriterium in Bezug auf deren Größe und/ oder deren zeitliche Variation erfüllt, die Transaktion durch die Vorrichtung abgebrochen wird.

Die soeben beschriebene Vorrichtung ist vorzugsweise zur Durchführung einer oder mehrerer bevorzugter Varianten des erfindungsgemäßen Verfahrens eingerichtet. Die Vorrichtung ist ferner vorzugsweise Bestandteil des Terminals, kann jedoch gegebenenfalls auch in dem Sicherheitsmodul integriert sein.

Ausführungsbeispiele der Erfindung werden nachfolgend anhand der beigefügten Figuren detailliert beschrieben.

Es zeigen:
- Fig. 1: eine schematische Darstellung einer herkömmlichen Kommunikation zwischen einem Terminal und einem mobilen Endgerät über eine kontaktlose Schnittstelle;
- Fig. 2: das Szenario eines Relay-Angriffs auf die Kommunikation gemäß Fig. 1;
- Fig. 3: die Komponenten eines Terminals und eines Endgeräts, mit denen eine Transaktion basierend auf einer Ausführungsform des erfindungsgemäßen Verfahrens abgesichert werden kann; und
- Fig. 4: ein Flussdiagramm, welches die Durchführung einer Ausführungsform des erfindungsgemäßen Verfahrens wiedergibt.

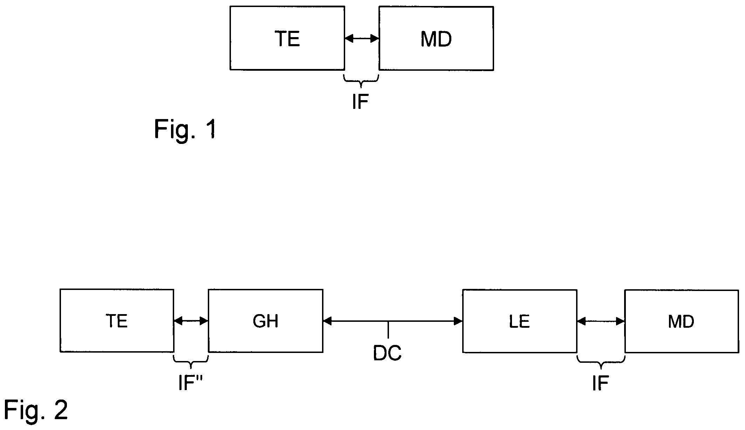

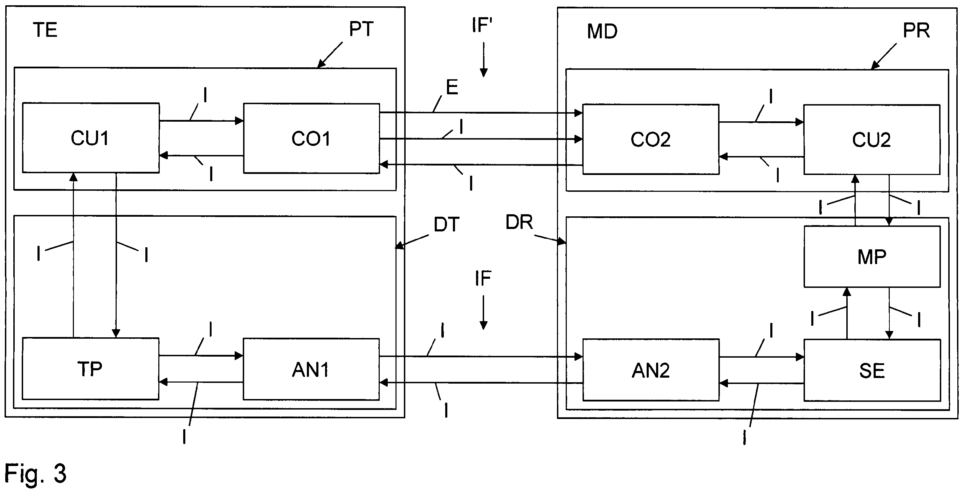

Fig. 1 zeigt ein Szenario einer herkömmlichen Kommunikation zwischen einem Terminal TE (z.B. einem Bezahl-Terminal) und einem mobilen Endgerät MD (z.B. einem Mobiltelefon). Die Kommunikation erfolgt über eine kontaktlose Schnittstelle IF, welche in der hier beschriebenen Ausführungsform eine NFC-Kommunikationsschnittstelle mit kurzer Reichweite ist. Das Endgerät MD ist ein Ausführungsbeispiel eines Sicherheitsmoduls und umfasst ein Sicherheitselement SE (siehe Fig. 3), das die NFC-Kommunikation über eine Spule bzw. Antenne mit einer entsprechenden Spule bzw. Antenne des Terminals TE durchführt. Zwischen Terminal TE und Endgerät MD wird über die Schnittstelle IF eine Transaktion durchgeführt, wie z.B. eine Bezahltransaktion, bei der der Nutzer mit seinem Endgerät am Terminal TE bezahlt.

Aus dem Stand der Technik sind sog. Relay-Angriffe bekannt, bei denen ein Angreifer unbefugt eine Transaktion über das Endgerät MD durchführt. Ein solcher Relay-Angriff ist in Fig. 2 gezeigt. Der Angreifer verwendet hierzu ein manipuliertes Terminal LE, welches auch als Leech bezeichnet wird. Er bringt den Leech LE in Reichweite der Kommunikationsschnittstelle IF und baut eine Kommunikation zum Endgerät MD auf, ohne dass der Nutzer des Endgeräts hiervon Kenntnis hat. Über einen Datenkanal DC wird dann die Kommunikation zwischen Endgerät MD und Leech LE an ein Dummy-Sicherheitsmodul GH (auch als Ghost bezeichnet) des Angreifers geleitet, das sich als Endgerät MD ausgibt und unbefugt eine Transaktion mit dem Terminal TE über die kontaktlose Schnittstelle IF" durchführt.

Zur Vermeidung dieser Relay-Angriffe macht man sich erfindungsgemäß die Erkenntnis zunutze, dass bei einem Relay-Angriff der Leech LE zum Aufbau der kontaktlosen Kommunikation hin zum Endgerät MD nur ungenau positioniert werden kann, was sich darin äußert, dass die Stärke einer induktiven Kopplung zwischen Leech LE und Endgerät MD außerhalb eines üblichen Wertebereichs liegt bzw. stark schwankt. In der hier beschriebenen Ausführungsform wird dabei nicht die induktive Kopplung der NFC-Schnittstelle IF aus Fig. 1 bzw. Fig. 2 betrachtet, sondern die induktive Kopplung einer weiteren kontaktlosen Schnittstelle zur Übertragung von Energie, mit der von dem Terminal TE elektrische Leistung an das Endgerät MD zu dessen Ladung bereitgestellt wird. Vorzugsweise beruht die Schnittstelle zur Energieübertragung auf dem Standard Qi und wird im Folgenden auch als Qi-Schnittstelle bezeichnet. Diese Schnittstelle stellt ein Ausführungsbeispiel einer zweiten Schnittstelle im Sinne der Ansprüche dar, wohingegen die in Fig. 1 bzw. Fig. 2 gezeigte kontaktlose Schnittstelle IF ein Ausführungsbeispiel einer ersten Schnittstelle im Sinne der Ansprüche ist.

Wie weiter unten näher beschrieben ist, wird ein Relay-Angriff auf das Endgerät MD immer dann erkannt, wenn die Kopplungsstärke des Wechselfelds der Qi-Schnittstelle über- bzw. unterschritten wird. Der Grund hierfür ist, dass es für einen Benutzer sehr einfach ist, sein Endgerät MD zur Durchführung einer ordnungsgemäßen Transaktion korrekt an das Terminal TE zu halten. Demgegenüber kann jedoch ein Angreifer seinen Leech für den Relay-Angriff längst nicht mit derselben Präzision in die Nähe des Endgeräts des Benutzers bringen. Dies liegt daran, dass der Ort des Endgeräts dem Angreifer nicht bekannt oder nur ungefähr bekannt ist (z.B. Tasche des Nutzers).

Als Kopplungsstärke der Qi-Schnittstelle wird in der hier beschriebenen Variante die Signalstärke des Wechselfelds der Qi-Schnittstelle am Ort des Endgeräts MD erfasst. Alternativ kann die Kopplungsstärke auch durch einen Kopplungsfaktor repräsentiert werden, der das Verhältnis der über die Qi-Schnittstelle empfangenen Energie zu der vom Terminal ausgesendeten Energie repräsentiert. Die Kopplungsstärke basierend auf der Signalstärke bzw. dem Kopplungsfaktor hängt von vielen Faktoren ab. Insbesondere wird die Kopplungsstärke umso kleiner, je größer der Abstand zwischen Terminal und Endgerät ist. Darüber hinaus wird die Kopplungsstärke umso geringer, je größer der Winkel der zur kontaktlosen Energieübertragung genutzten Spulen im Endgerät und Terminal ist, wobei die Kopplungsstärke bei paralleler Ausrichtung der Spulen am größten ist. Darüber hinaus wird die Kopplungsstärke durch die laterale/ seitliche Verschiebung der an der kontaktlosen Energieübertragung beteiligten Spulen zueinander beeinflusst, wobei die Kopplungsstärke ohne laterale Verschiebung der Spulen am größten ist.

Um einen kontaktlosen Ladevorgang über eine Qi-Schnittstelle möglichst energieeffizient durchzuführen, ist in der Qi-Schnittstelle des Endgeräts MD eine entsprechende Messeinheit für die Signalstärke des zur Ladung genutzten Wechselfelds vorgesehen. Diese Signalstärke wird in dem Standard Qi als "Signal Strength" bezeichnet und in einem sog. Signal Strength Packet (0x01) übermittelt. Diese Signalstärke wird nunmehr zur Erkennung von Relay-Angriffen genutzt.

Fig. 3 zeigt den Aufbau eines Terminals TE und eines Endgeräts MD, mit denen eine Absicherung einer Transaktion basierend auf der Signalstärke einer Qi-Schnittstelle erreicht werden kann. Das Terminal TE und das mobile Endgerät MD verfügen über die kontaktlose NFC-Schnittstelle IF, über welche die Transaktion durchgeführt wird. Hierfür ist in dem Terminal TE eine Datenübertragungseinheit DT (DT = Data Transmitter) und in dem Endgerät MD eine Datenempfangseinheit DR (DR = Data Receiver) vorgesehen. Die kontaktlose Kommunikation basierend auf der Schnittstelle IF erfolgt über einen Datenaustausch zwischen einer Hochfrequenz-Antenne AN1 der Datenübertragungseinheit DT und einer Hochfrequenzantenne AN2 der Datenempfangseinheit DR. In Fig. 3 ist dabei ein Informationsaustausch zwischen entsprechenden Komponenten immer durch Pfeile mit dem Bezugszeichen I angedeutet. Zur Datenübertragung über die NFC-Schnittstelle IF sind ferner ein Terminal-Prozessor TP in der Datenübertragungseinheit DT sowie ein Sicherheitselement SE und ein mobiler Prozessor MP in der Datenempfangseinheit DR vorgesehen. Der Terminal-Prozessor TP kommuniziert mit der Antenne AN1. Entsprechend kommunizieren das Sicherheitselement SE bzw. der mobile Prozessor MP unter Zwischenschaltung des Sicherheitselements mit der Antenne AN2.

Zwischen dem Terminal TE und dem Endgerät MD ist ferner die Qi-Schnittstelle IF' vorgesehen, welche auf Seiten des Terminals TE durch eine Ladestation PT (PT = Power Transmitter) und auf Seiten des Endgeräts MD durch eine Ladeeinheit PR (PR = Power Receiver) realisiert ist. Zur induktiven Energieübertragung mittels eines magnetischen Wechselfelds ist in der Ladestation PT eine Primärspule CO1 und in der Ladeeinheit PR eine Sekundärspule CO2 vorgesehen. Die Energieübertragung von der Spule CO1 zu der Spule CO2 ist dabei durch den Pfeil E angedeutet. Ferner können zwischen den Spulen auch Informationen ausgetauscht werden, wie durch Pfeile I angedeutet ist. Die Ladestation PT verfügt ferner über eine Kommunikations- und Steuereinheit CU1, welche zum einen mit der Spule CO1 und zum anderen mit dem Terminal-Prozessor TP der Datenübertragungseinheit DT kommuniziert. Analog ist auch in der Ladeeinheit PR eine Kommunikations- und Steuereinheit CU2 vorgesehen, die sowohl mit der Spule CO2 als auch dem mobilen Prozessor MP der Datenempfangseinheit DR kommuniziert.

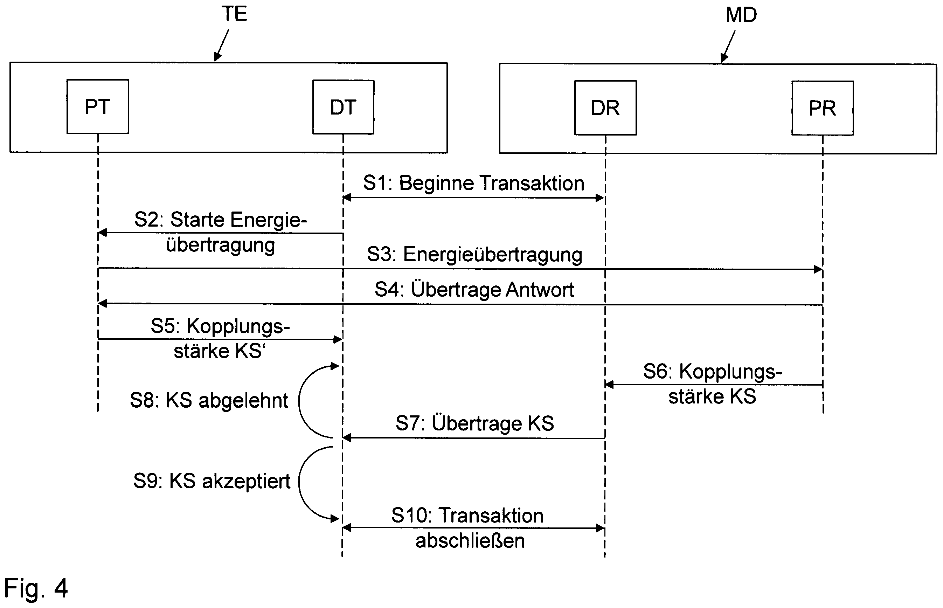

Eine Variante des erfindungsgemäßen Verfahrens zur Absicherung einer über die Schnittstelle IF der Fig. 3 durchgeführten Transaktion ist im Flussdiagramm der Fig. 4 gezeigt. In Schritt S1 wird durch einen Datenaustausch zwischen der Datenübertragungseinheit DT und der Datenempfangseinheit DR die Transaktion über die NFC-Schnittstelle IF begonnen. Anschließend wird in einem Schritt S2 eine Energieübertragung durch einen entsprechenden Befehl der Datenübertragungseinheit DT an die Ladestation PT gestartet. Es erfolgt dann in Schritt S3 die Energieübertragung über die Schnittstelle IF' zwischen der Ladestation PT des Terminals TE und der Ladeeinheit PR des Endgeräts MD. In Schritt S4 wird eine Antwort über die Schnittstelle IF' (insbesondere sog. "End Power Transfer"-Pakete gemäß dem Standard Qi) von der Ladeeinheit PR an die Ladestation PT übermittelt. In Schritt S5 wird von der Ladestation PT die Information an die Datenübertragungseinheit DT gegeben, dass die Energieübertragung eingerichtet ist. Zudem wird der Datenübertragungseinheit DT eine durch die Ladestation PT gemessene Kopplungsstärke KS' übergeben.

In der Ladeeinheit PR wird in an sich bekannter Weise in Schritt S6 eine Kopplungsstärke KS in der Form der Signalstärke des Wechselfelds der Schnittstelle IF' ermittelt und an die Datenempfangseinheit DR gegeben. Diese überträgt in Schritt S7die Kopplungsstärke KS an die Datenübertragungseinheit DT.

Die übertragene Kopplungsstärke KS wird anschließend von der Datenübertragungseinheit DT ausgewertet. Dabei wird überprüft, ob die Signalstärke innerhalb eines vorbestimmten Bereichs liegt, wobei der vorbestimmte Bereich derart festgelegt ist, dass er Werte von Signalstärken repräsentiert, wenn das Endgerät bei einer ordnungsgemäßen Transaktion ohne Relay-Angriff korrekt am Terminal TE positioniert ist. Wird dabei festgestellt, dass die Signalstärke nicht in dem vorbestimmten Bereich liegt, wird in einem Schritt S8 die Kopplungsstärke KS durch die Datenübertragungseinheit DT zurückgewiesen und die Transaktion über die Schnittstelle IF abgebrochen. Sollte demgegenüber die Kopplungsstärke KS in dem vorbestimmten Bereich liegen, wird diese Kopplungsstärke in Schritt S9 durch die Datenübertragungseinheit DT akzeptiert und die Transaktion in Schritt S10 ordnungsgemäß abgeschlossen.

Der Bereich, in welchem die übertragene Kopplungsstärke KS liegen sollte, wird insbesondere durch die lokal gemessene Kopplungsstärke KS' bestimmt. Die Auswertung umfasst also beispielsweise einen Vergleich der lokal gemessenen Kopplungsstärke KS' mit der übertragenen Kopplungsstärke KS.

In einer Variante des oben beschriebenen Verfahrens muss die Kopplungsstärke zusätzlich für einen bestimmten Zeitraum (z.B. 20 ms) in dem vorbestimmten Bereich liegen, damit kein Relay-Angriff festgestellt wird. In diesem Fall wird die Kopplungsstärke KS in regelmäßigen Abständen von dem Endgerät erfasst und an die Datenübertragungseinheit DT übermittelt. Übertragen werden können einzelne Messwerte für die Kopplungsstärke oder eine Messkurve für einen Zeitraum. Nur wenn die Kopplungsstärke für den bestimmten Zeitraum in dem vorbestimmten Bereich liegt, wird die Transaktion abgeschlossen. Ansonsten wird die Transaktion abgebrochen. Gerade der Vergleich der lokal gemessenen Kopplungsstärke KS' mit der übertragenen Kopplungsstärke KS für einen Zeitraum bietet eine besonders hohe Sicherheit, da Relay-Angriffe mit sehr hoher Wahrscheinlichkeit erkannt werden. Gegebenenfalls kann auch überprüft werden, ob ein von der Ladestation PT über die Schnittstelle IF' gesendetes variables Signal möglichst unverzerrt wiedergegeben wird (d.h. Messung eines Signals über die Zeit). Ist dies nicht der Fall, wird die Transaktion ebenfalls abgebrochen.

Es ist ebenso möglich die Kopplungsstärke KS' an die Datenempfangseinheit DR zu übertragen und in dem Endgerät MD mit der dort lokal gemessenen Kopplungsstärke zu vergleichen. Der Abbruch erfolgt dann ebenfalls analog durch das Endgerät MD.

Eine übertragene Kopplungsstärke KS, KS' wird bevorzugt kryptographisch gesichert, also verschlüsselt und/ oder signiert, übertragen. Ein Angreifer kann somit keine durch ihn möglicherweise erfassten Messwerte verwenden.

In den gerade beschriebenen Varianten des erfindungsgemäßen Verfahrens wird die Kopplungsstärke KS über die verschlüsselte NFC-Datenverbindung an das Terminal TE gesendet und nicht über die Datenverbindung der Qi-Schnittstelle. Dies hat den Vorteil, dass die Kopplungsstärke weder von einem Angreifer manipuliert noch von diesem mitgehört werden kann. Hierdurch wird verhindert, dass der Ghost des Angreifers eine manipulierte Signalstärke an das Terminal übermittelt und somit eine ordnungsgemäße Positionierung des Endgeräts MD am Terminal TE simuliert. Ferner wird verhindert, dass der Angreifer in Reaktion auf eine mitgehörte Signalstärke die Positionierung seines Leech in Bezug auf das Endgerät anpasst und hierdurch erreicht, dass der Relay-Angriff nicht erkannt wird.

Die im Vorangegangenen beschriebenen Ausführungsformen der Erfindung weisen eine Reihe von Vorteilen auf. Insbesondere wird auf einfache Weise ein Relay-Angriff über die Ermittlung einer Kopplungsstärke einer kontaktlosen Schnittstelle zwischen einem Endgerät und einem Terminal erkannt. Dafür können vorhandene Mittel im Terminal und Endgerät, insbesondere eine Schnittstelle zur drahtlosen Energieübertragung, genutzt werden. Das Verfahren ist dabei nicht nur auf Endgeräte, sondern auch auf Chipkarten oder Tokens anwendbar, denn die drahtlose Energieübertragung erfordert keinen Energiespeicher auf der Empfängerseite.

## Patentansprüche

1. Verfahren zur Absicherung einer Transaktion zwischen einem Terminal (TE) und einem Sicherheitsmodul (MD), welche im Rahmen der Transaktion über das Wechselfeld einer ersten kontaktlosen Schnittstelle (IF) kommunizieren, wobei während der Durchführung der Transaktion am Ort des Sicherheitsmoduls (MD) eine Kopplungsstärke (KS) erfasst wird, welche eine Kopplung zwischen dem Terminal (TE) und dem Sicherheitsmodul (MD) über ein Wechselfeld einer zweiten kontaktlosen Schnittstelle (IF') repräsentiert, wobei im Falle, dass die Kopplungsstärke (KS) ein Abbruchkriterium in Bezug auf deren Größe und/ oder deren zeitliche Variation erfüllt, die Transaktion abgebrochen wird.

2. Verfahren nach Anspruch 1, **dadurch gekennzeichnet, dass** das Sicherheitsmodul (MD) ein tragbarer Datenträger oder ein Endgerät mit damit verbundenem tragbaren Datenträger ist, wobei der tragbare Datenträger vorzugsweise eine Chipkarte und/oder ein Sicherheitselement und/ oder ein Token und/ oder ein RFID-Transponder und/ oder ein NFC-Modul ist.

3. Verfahren nach Anspruch 1 oder 2, **dadurch gekennzeichnet, dass** die erste Schnittstelle (IF) eine RFID-Schnittelle ist, insbesondere eine NFC-Schnittstelle oder eine UHF-RFID-Schnittstelle, und/ oder die zweite Schnittstelle (IF') eine Schnittstelle zur induktiven Energieübertragung ist, insbesondere eine Qi-Schnittstelle.

4. Verfahren nach einem der vorhergehenden Ansprüche, **dadurch gekennzeichnet, dass** die erste Schnittstelle (IF) kryptographisch gesichert ist.

5. Verfahren nach einem der vorhergehenden Ansprüche, **dadurch gekennzeichnet, dass** während der Durchführung der Transaktion in dem Terminal (TE) eine Terminal-Kopplungsstärke (KS') erfasst wird.

6. Verfahren nach einem der vorhergehenden Ansprüche, **dadurch gekennzeichnet, dass** die während der Durchführung der Transaktion erfasste Kopplungsstärke (KS) dem Terminal (TE) übertragen wird, welches das Abbruchkriterium überprüft und bei dessen Erfüllung die Transaktion abbricht.

7. Verfahren nach einem der Ansprüche 5 oder 6, **dadurch gekennzeichnet, dass** die während der Durchführung der Transaktion erfasste Terminal-Kopplungsstärke (KS) dem Sicherheitsmodul (MD) übertragen wird, welches das Abbruchkriterium überprüft und bei dessen Erfüllung die Transaktion abbricht.

8. Verfahren nach einem der vorhergehenden Ansprüche, **dadurch gekennzeichnet, dass** die Überprüfung des Abbruchkriteriums einen Vergleich einer lokal gemessenen Kopplungsstärke (KS'; KS) mit einer über die erste Schnittstelle (IF) übertragenen Kopplungsstärke (KS; KS') umfasst.

9. Verfahren nach einem der vorhergehenden Ansprüche, **dadurch gekennzeichnet, dass** das Sicherheitsmodul (MD) die Kopplungsstärke (KS) erfasst, welche die Kopplung zwischen dem Terminal (TE) und dem Sicherheitsmodul (MD) über das Wechselfeld der zweiten Schnittstelle (IF') repräsentiert, und die erfasste Kopplungsstärke (KS) über die erste Schnittstelle (IF) an das Terminal (TE) übermittelt, das das Abbruchkriterium überprüft und bei dessen Erfüllung die Transaktion abbricht.

10. Verfahren nach einem der vorhergehenden Ansprüche, **dadurch gekennzeichnet, dass** die Kopplungsstärke (KS) durch einen Wert repräsentiert wird, der umso größer ist, je größer die Signalstärke des Wechselfelds der ersten und/oder zweiten Schnittstelle (IF, IF') am Ort des Sicherheitsmoduls (MD) ist.

11. Verfahren nach einem der vorhergehenden Ansprüche, **dadurch gekennzeichnet, dass** es zur Erfüllung des Abbruchkriteriums erforderlich ist, dass während der Durchführung der Transaktion die Kopplungsstärke (KS) zumindest zeitweise und insbesondere länger als ein vorbestimmtes Zeitintervall außerhalb eines vorbestimmten Wertebereichs und insbesondere unterhalb eines vorgegebenen Schwellwerts liegt und/ oder die zeitliche Variation der Kopplungsstärke (KS) zumindest zeitweise und insbesondere länger als ein vorbestimmtes Zeitintervall eine vorbestimmte Schwelle überschreitet.

12. Verfahren nach einem der vorhergehenden Ansprüche, **dadurch gekennzeichnet, dass** es zur Erfüllung des Abbruchkriteriums erforderlich ist, dass während der Durchführung der Transaktion die Kopplungsstärke (KS) weniger als eine vorbestimmte Zeitspanne innerhalb eines vorbestimmten Wertebereichs liegt.

13. Verfahren nach einem der vorhergehenden Ansprüche, **dadurch gekennzeichnet, dass** die Erfüllung des Abbruchkriteriums an ein Zeitlimit gekoppelt ist, wobei das Abbruchkriterium dann erfüllt ist, wenn eine Zeitspanne, in der die Kopplungsstärke (KS) während der Durchführung der Transaktion außerhalb eines vorbestimmten Wertebereichs liegt, das Zeitlimit überschreitet.

14. Vorrichtung zur Absicherung einer Transaktion zwischen einem Terminal (TE) und einem Sicherheitsmodul (MD), welche im Rahmen der Transaktion über das Wechselfeld einer ersten kontaktlosen Schnittstelle (IF) kommunizieren, wobei die Vorrichtung derart ausgestaltet ist, dass sie während der Durchführung der Transaktion eine Kopplungsstärke (KS) am Ort des Sicherheitsmoduls (MD) erfasst oder eine erfasste Kopplungsstärke (KS) empfängt, wobei die Kopplungsstärke (KS) eine Kopplung zwischen dem Terminal (TE) und der Sicherheitsmodul (MD) über ein Wechselfeld einer zweiten kontaktlosen Schnittstelle (IF') repräsentiert, wobei im Falle, dass die Kopplungsstärke (KS) ein Abbruchkriterium in Bezug auf deren Größe und/oder deren zeitliche Variation erfüllt, die Transaktion durch die Vorrichtung abgebrochen wird.

15. Vorrichtung nach Anspruch 14, **dadurch gekennzeichnet, dass** die Vorrichtung zur Durchführung eines Verfahrens nach einem der Ansprüche 2 bis 13 eingerichtet ist.

## Claims

1. A method for securing a transaction between a terminal (TE) and a security module (MD), which communicate within the framework of the transaction via the alternating field of a first contactless interface (IF),
wherein
while the transaction is carried out at the location of the security module (MD) a coupling strength (KS) is detected which represents a coupling between the terminal (TE) and the security module (MD) via an alternating field of a second contactless interface (IF'),
wherein, in the case that the coupling strength (KS) fulfills an abort criterion with reference to its magnitude and/or its temporal variation, the transaction is aborted.

2. The method according to claim 1, **characterized in that** the security module (MD) is a portable data carrier or a terminal with a portable data carrier connected thereto, wherein the portable data carrier is preferably a chip card and/or a security element and/or a token and/or an RFID transponder and/or an NFC-module.

3. The method according to claim 1 or 2, **characterized in that** the first interface (IF) is an RFID interface, in particular an NFC-interface or a UHF-RFID interface, and/or the second interface (IF') is an interface for inductive energy transfer, in particular a Qi interface.

4. The method according to any of the preceding claims, **characterized in that** the first interface (IF) is cryptographically secured.

5. The method according to any of the preceding claims, **characterized in that** while the transaction is carried out a terminal coupling strength (KS') is detected in the terminal (TE).

6. The method according to any of the preceding claims, **characterized in that** the coupling strength (KS) detected while the transaction is carried out is transferred to the terminal (TE), which checks the abort criterion and aborts the transaction when said criterion is fulfilled.

7. The method according to any of the claims 5 or 6, **characterized in that** the terminal coupling strength (KS) detected while the transaction is carried out is transferred to the security module (MD), which checks the abort criterion and aborts the transaction when said criterion is fulfilled.

8. The method according to any of the preceding claims, **characterized in that** the checking of the abort criterion includes a comparison of a locally measured coupling strength (KS'; KS) with a coupling strength (KS; KS') transferred via the first interface (IF).

9. The method according to any of the preceding claims, **characterized in that** the security module (MD) detects the coupling strength (KS) which represents the coupling between the terminal (TE) and the security module (MD) via the alternating field of the second interface (IF'), and transmits the detected coupling strength (KS) via the first interface (IF) to the terminal (TE), which checks the abort criterion and aborts the transaction when said criterion is fulfilled.

10. The method according to any of the preceding claims, **characterized in that** the coupling strength (KS) is represented by a value that is the higher, the higher the signal strength of the alternating field of the first and/or second interface (IF, IF') is at the location of the security module (MD).

11. The method according to any of the preceding claims, **characterized in that** it is required for fulfilling the abort criterion that while the transaction is carried out, the coupling strength (KS) at least temporarily and in particular for longer than a predetermined time interval lies outside a predetermined range of values and in particular below a predetermined threshold value and/or the temporal variation of the coupling strength (KS) at least temporarily and in particular for longer than a predetermined time interval exceeds a predetermined threshold.

12. The method according to any of the preceding claims, **characterized in that** it is required or fulfilling the abort criterion that while the transaction is carried out, the coupling strength (KS) lies within a predetermined range of values for less than a predetermined time span.

13. The method according to any of the preceding claims, **characterized in that** the fulfillment of the abort criterion is coupled to a time limit, wherein the abort criterion is fulfilled when a time span within which the coupling strength (KS) lies outside of a predetermined range of values while the transaction is carried out exceeds the time limit.

14. A device for securing a transaction between a terminal (TE) and a security module (MD), which communicate within the framework of the transaction via the alternating field of a first contactless interface (IF),
wherein
the device is configured such that it detects a coupling strength (KS) at the location of the security module (MD) or receives a detected coupling strength (KS) while the transaction is carried out, wherein the coupling strength (KS) represents a coupling between the terminal (TE) and the security module (MD) via an alternating field of a second contactless interface (IF ') wherein, in the case that the coupling strength (KS) fulfills an abort criterion with reference to is magnitude and/or its temporal variation, the transaction is aborted by the device.

15. The device according to claim 14, **characterized in that** the device is adapted to carry out a method according to any of the claims 2 to 13.

## Revendications

1. Procédé de sécurisation d'une transaction entre un terminal (TE) et un module de sécurité (MD) qui, dans le cadre de la transaction, communiquent par l'intermédiaire du champ alternatif d'une première interface (IF) sans contact,
cependant que
pendant l'exécution de la transaction, à l'endroit du module de sécurité (MD), un taux de couplage (KS) est saisi, lequel représente un couplage entre le terminal (TE) et le module de sécurité (MD) par l'intermédiaire d'un champ alternatif d'une deuxième interface (IF') sans contact, cependant que, dans le cas où le taux de couplage (KS) remplit un critère d'interruption en ce qui concerne sa grandeur et/ou sa variation temporelle, la transaction est interrompue.

2. Procédé selon la revendication 1, **caractérisé en ce que** le module de sécurité (MD) est un support de données portable ou un terminal ayant un support de données portable lui étant relié, le support de données portable étant de préférence une carte à puce et/ou un élément de sécurité et/ou un jeton et/ou un transpondeur RFID et/ou un module NFC.

3. Procédé selon la revendication 1 ou 2, **caractérisé en ce que** la première interface (IF) est une interface RFID, en particulier une interface NFC ou une interface UHF-RFID, et/ou **en ce que** la deuxième interface (IF') est une interface de transmission inductive d'énergie, en particulier une interface Qi.

4. Procédé selon une des revendications précédentes, **caractérisé en ce que** la première interface (IF) est sécurisée cryptographiquement.

5. Procédé selon une des revendications précédentes, **caractérisé en ce que**, pendant l'exécution de la transaction, un taux de couplage de terminal (KS') est saisi dans le terminal (TE).

6. Procédé selon une des revendications précédentes, **caractérisé en ce que** le taux de couplage de terminal (KS) saisi pendant l'exécution de la transaction est transmis au terminal (TE), lequel vérifie le critère d'interruption et interrompt la transaction si ce dernier est rempli.

7. Procédé selon une des revendications 5 ou 6, **caractérisé en ce que** le taux de couplage de terminal (KS) saisi pendant l'exécution de la transaction est transmis au module de sécurité (MD), lequel vérifie le critère d'interruption et interrompt la transaction si ce dernier est rempli.

8. Procédé selon une des revendications précédentes, **caractérisé en ce que** la vérification du critère d'interruption comprend une comparaison d'un taux de couplage (KS'; KS) localement mesuré avec un taux de couplage (KS; KS') transmis par l'intermédiaire de la première interface (IF).

9. Procédé selon une des revendications précédentes, **caractérisé en ce que** le module de sécurité (MD) saisit le taux de couplage (KS) qui représente le couplage existant entre le terminal (TE) et le module de sécurité (MD) par l'intermédiaire du champ alternatif de la deuxième interface (IF'), et transfère le taux de couplage (KS) saisi par l'intermédiaire de la première interface (IF) au terminal (TE) qui vérifie le critère d'interruption et interrompt la transaction si ce dernier est rempli.

10. Procédé selon une des revendications précédentes, **caractérisé en ce que** le taux de couplage (KS) est représenté par une valeur qui est d'autant plus élevée que l'intensité du signal du champ alternatif de la première et/ou de la deuxième interface (IF, IF') est élevée à l'endroit du module de sécurité (MD).

11. Procédé selon une des revendications précédentes, **caractérisé en ce que**, pour que le critère d'interruption soit rempli, il faut que, pendant l'exécution de la transaction, le taux de couplage (KS) se situe au moins temporairement, et en particulier plus longtemps qu'un intervalle de temps prédéterminé, à l'extérieur d'une plage de valeurs prédéterminée, et en particulier au-dessous d'une valeur seuil prédéterminée, et/ou que la variation temporelle du taux de couplage (KS) dépasse au moins temporairement, et en particulier plus longtemps qu'un intervalle de temps prédéterminé, un seuil prédéterminé.

12. Procédé selon une des revendications précédentes, **caractérisé en ce que**, pour que le critère d'interruption soit rempli, il faut que, pendant l'exécution de la transaction, le taux de couplage (KS) se situe durant moins d'un laps de temps prédéterminé à l'intérieur d'une plage de valeurs prédéterminée.

13. Procédé selon une des revendications précédentes, **caractérisé en ce que** le fait que le critère d'interruption soit rempli est couplé à une limite de temps, le critère d'interruption étant rempli quand un laps de temps, durant lequel le taux de couplage (KS) se situe à l'extérieur d'une plage de valeurs prédéterminée pendant l'exécution de la transaction, dépasse la limite de temps.

14. Dispositif de sécurisation d'une transaction entre un terminal (TE) et un module de sécurité (MD) qui, dans le cadre de la transaction, communiquent par l'intermédiaire du champ alternatif d'une première interface (IF) sans contact,
cependant que
le dispositif est conçu de telle façon que, pendant l'exécution de la transaction, il saisit un taux de couplage (KS) à l'endroit du module de sécurité (MD) ou reçoit un taux de couplage (KS) saisi,
cependant que le taux de couplage (KS) représente un couplage entre le terminal (TE) et le module de sécurité (MD) par l'intermédiaire d'un champ alternatif d'une deuxième interface (IF') sans contact, cependant que, dans le cas où le taux de couplage (KS) remplit un critère d'interruption en ce qui concerne sa grandeur et/ou sa variation temporelle, la transaction est interrompue par le dispositif.

15. Dispositif selon la revendication 14, **caractérisé en ce que** le dispositif est équipé pour exécuter un procédé selon une des revendications de 2 à 13.
